Europäisches Patentamt

European Patent Office

Office européen des brevets

(11) Publication number: **0 329 735 B1**

# EUROPEAN PATENT SPECIFICATION

(45) Date of publication of patent specification: **04.11.92**   (51) Int. Cl.⁵: **A23L  1/236**

(21) Application number: **88906661.9**

(22) Date of filing: **14.07.88**

(86) International application number:
**PCT/US88/02398**

(87) International publication number:
**WO 89/00819 (09.02.89 89/04)**

(54) **SELF STABILIZED DIPEPTIDE SWEETENERS.**

(30) Priority: **29.07.87 US 78954**

(43) Date of publication of application:
**30.08.89 Bulletin  89/35**

(45) Publication of the grant of the patent:
**04.11.92 Bulletin  92/45**

(84) Designated Contracting States:
**AT BE CH DE FR GB IT LI LU NL SE**

(56) References cited:
**EP-A- 0 137 326**
**US-A- 4 588 366**
**US-A- 4 597 970**
**US-A- 4 722 845**
**US-A- 4 724 794**

**No further relevant documents have been disclosed.**

(73) Proprietor: **THE NUTRASWEET COMPANY (a Delaware corporation)**
**1751 Lake Cook Road**
**Deerfield Illinois 60015(US)**

(72) Inventor: **TSAU, Joseph, Heng-Ko**
**5348 Brummel Street**
**Skokie, IL 60077(US)**

(74) Representative: **Wolff, Hans Joachim, Dr.jur. Dipl.-Chem. et al**
**Beil, Wolff & Beil Rechtsanwälte Postfach 80 01 40 Adelonstrasse 58**
**W-6230 Frankfurt am Main 80(DE)**

## Description

Background of the Invention

Dipeptide sweeteners such as aspartame (L-aspartyl-L-phenylalanine methyl ester) have been recognized for some time as being extremely good tasting, low-caloric sweetener compounds for use in a wide variety of food products. Soft drinks, fruit juices, dairy products and others have been able to capture a consumer audience which would not otherwise exist in this fitness conscious society through the use of this sweetener. Its preparation and use has been described in U.S. Patents 3,492,131 and 3,642,491.

Aspartame (APM), however, is known to undergo thermal degradation, especially in wet environments under heat such as is found in many baking applications. Maximum aspartame recovery in cooking and baking applications has been found to fall between 12-35%. The major thermal degradation route of aspartame is through intra-molecular cyclization to form diketopiperazine (DKP) which involves a reaction between the amine ($-NH_2$) and the carboxylic acid methyl ester ($-COOCH_3$) groups of the component amino acids. DKP is non-toxic and safe but it has no sweetness.

Much has been done in the past in an attempt to stabilize aspartame for baking and other heat related applications. These have mostly involved the use of stabilizing agents which are believed to block the amine group thereby retarding cyclization. These stabilizers have taken the form of long chain polysaccharide polymers such as polymaltose and polydextrose (Colliopoulos et al., 4,631,195), partially hydrogenated vegetable oil (Tsau et al., EPO 137,326), a combination of fatty acid and lecithin (Sharma et al. 4,597 970), a combination of fat, emulsifier, and polysaccharide (Okada 4,465,694), aliphatic acids, their esters and alcohols (Vaccaro EPO 137,690) and cyclodextrin or fatty acid sugar esters (Takashi EPO 97,950). These stabilizers are either mixed with a binder and aspartame into a granular or powder matrix or used to coat the aspartame particles or granules in a protective manner.

Although several compositions have been developed to stabilize aspartame in moist systems under heat, there has been no evidence of what kind of stabilizing interactions occur here. The majority of the prior art stabilization methods and compounds utilize reversible interactions without taking into account the factors of chemical equilibria and kinetics. The agents used in the prior art such as fats, carbohydrates, cyclodextrin, polydextrose and fatty acid sugar esters are polymers which may slow down diketopiperazine formation or aspartame cyclization through hydrogen bonding, complexation and/or molecular entrapping interactions. These, however, are weak physico-chemical interactions which are not specific to the compounds utilized.

The heat stabilized aspartame compositions of the prior art often do not provide satisfactory baking stability. The reversible interactions disclosed therein when heated in a moist environment will expose the protected aspartame by dissociation and diffusion mechanisms which is then degraded in solution.

EPO 137,326 (Tsau) taught the importance of kinetic or particle size factors for both stabilizing APM and the effective utilization of APM as a sweetening agent in baking applications. It disclosed that granules of APM-fat compositions falling within a narrow particle size range are useful for baking applications. Granular particles larger than 40 mesh and smaller than 8 mesh have baking stability and can be released by baking to sweeten baked goods. To achieve the best results, particles falling within a narrow particle size range, e.g. ± 5 mesh, should be used for any particular baking application. Such a baking product can be expensive however, since the yield of granules falling within the narrower particle size range is generally very low when a conventional granulation method such as the high-shear-energy granulation method used in the EPO 137,326, is utilized.

Therefore, further improvements in the baking stability of APM are needed. One improvement of the present invention utilizes uniform spherical granules which impart a mechanism of uniform sustained-release to APM and permits uniform encapsulation of the materials. Available commercial equipment and techniques for making uniform size spherical granules were evaluated. To granulate APM and polydextrose powder that was mixed in a Glatt fluid-bed Roto Processor was unsatisfactory since the granules made were porous and broke while drying. Coating an APM suspension onto nonpareil granular seeds in the same equipment also failed, since it is difficult to attach long needle APM crystals onto the seeds. An extrusion-spheronizing granulation system (NICA) was also tried without success. This commercial equipment could not produce APM granules with a diameter smaller than 0.6 mm. None of the APM compositions could be wetted to produce proper softness and stickiness necessary for successful granulation by this equipment.

Therefore, there is a need of a simple granulation method to make spherical APM granules of uniform size for a broad range of applications either by themselves or coated by material to increase both the sustained release and self-stabilizing capabilities.

A fat coated APM baking product by itself has limited applications since it can not be used to sweeten

EP 0 329 735 B1

non-baked foods and cold beverages since baking or heating in wet systems is needed to release APM'S sweet taste. Also it is not acceptable to use fat coated APM in hot beverages which leaves fat deposits in the drink.

In addition to increasing both the process and material costs and reducing the number of potential APM applications, fat is high in caloric content, and is linked to such health problems as heart disease, high blood pressure, and obesity. Therefore, it is desirable to develop a heat stable APM baking product that is also low in fat content or fat free.

Summary of the Invention

The present invention is directed to a more stabilized form of aspartame for baking and other heat applications. It is believed that the stability is achieved through physico-chemical interactions including both inter- and intra-molecular hydrogen bonding between the aspartame molecules themselves and utilization of a critical particle size range. The self stabilization arises by interactions between the amine ($-NH_2$ and $-NH-$) groups and the carboxyl ($-COOH$ and $-COOCH_3$) groups within and among the respective aspartame molecules. The presence of strong intra- and inter- molecular hydrogen bonding interactions within and among APM molecules is evidenced by the fact that APM has an unusually low $pk_1$ value, a low solubility and a high dry stability. These molecular interactions, which result in APM'S self-stabilization effects, are enhanced and prolonged by forming the APM crystals into non-porous granules, preferably spherical. Secondly, the dense non-porous spherical granules of the present invention are more stable to heat and moisture environments since water present in those environments has a more difficult time entering and diffusing out of a sphere which geometrically possesses the minimum surface area per unit volume.

The aspartame products of the present invention are dense granular particles of substantially uniform spherical shape within a narrow particle size distribution. These granules can be formed with or without additional stabilizing or sustained release agents to further retard the dissolution rate in heated environments. The sustained release effect can be further enhanced through the addition of a hydrophobic coating about the granules which, due to their uniform spheroidal shape, can be evenly coated to obtain optimum coating protection. Also included in this invention is a granulation method which can turn needle-shaped crystalline APM powder into the non-porous approximately uniform size spherical granules.

Description of the Drawings

Figure 1 is a cross-sectional view of one embodiment of the processor utilized to carry out the method of the present invention showing a modification of the Aeromatic Prototype 1 Roto Processor/Spheronizer with elevated spoke-like ridges on the bottom disc.

Figure 2 is a cross-sectional view of a second embodiment showing a modification of the Aeromatic Prototype 1 Roto Processor/Spheronizer with an upwardly curved outer edge of the bottom disc.

Figure 3 is a cross-sectional view of a third embodiment showing a modification of the Aeromatic Prototype 1 Roto Processor/Spheronizer with a fluidizing circulation aid.

Figure 4 is a cross-sectional view of the spheronizer of the present invention in operation showing the flow of aspartame powder as it is compacted into dense non-porous spherical granules of uniform size distribution.

Description of the Invention

Whereas the inventive concept stems from work with aspartame, it is understood that the present process will apply to any dipeptide of value used in cooking and baking applications. The invention relates to the unexpected self-stabilization effect of APM which is as good or better than those provided by stabilizing agents taught in the prior art. It is unexpected that APM molecules alone can be stabilized in baking and that APM in a granule can be wetted, dissolved and dispersed into a variety of cake, cookie and other food matrices without serious degradation by baking.

It is well known in the art that APM is unstable in wet and heat environments. Some compositions are known in the prior art which stabilize APM in certain applications such as baking and heat-processed foods. In baking applications it has been shown that APM can be stabilized in APM-fat compositions that have a granular particle size greater than 40 U.S. standard mesh while fine powder APM-fat compositions cannot. The fact that APM'S baking stability increases with granular APM particle size was also found true for some stabilized APM compositions disclosed by Okada (4,465,694). This has led to the conclusion that APM is stabilized in baking by both increasing granular particle size and by using fat as a stabilizer. Fat was

3

considered an essential component since several irregular granular compositions of APM without fat coating were found to have only slightly improved baking stability over APM powder alone.

Both the stability and the releasing rate of APM in the present granule invention in a food matrix depend on many factors such as water content, pH, the viscosity of the food matrix and the heating temperature and duration. For best results, multiple aspartame products, differing mainly in granular size, coating thickness and/or buffer content, are needed for different applications. For example, cookies, whose batters contain less water and whose cooking times are shorter than those of cakes, give better sweetening results using aspartame granules with smaller particle sizes and/or thinner coatings than those for cakes.

The granules of this invention achieve over 80% recovery of aspartame from baked goods and a satisfactory dispersion of aspartame and its sweetness throughout the baked product. Both the disappearance of the aspartame granular particles and the high sweetness level in the foods indicate that most of the aspartame in the granules was dissolved and diffused into the food matrix by the heat process. Since dissolved aspartame is expected to degrade quickly during the heat process, the baking stability of aspartame in these granular samples is unexpectedly high.

This unexpected stabilization is believed to be a result of the above discussed binding effects such as the inter- and intra-molecular hydrogen bonding of aspartame at very high concentrations. For example, the solubility of aspartame increases with temperature to well above 10% during the baking process. At a high concentration such as that created by the formation of the dense, uniformly shaped spherical particles, the intermolecular hydrogen-bonding effects among aspartame molecules may be so profound that it enhances aspartame's baking stability. As the baking process proceeds, a small amount of water is able to enter the granule and is gradually absorbed. The spherical granule dissolves and the APM becomes a highly concentrated solution that diffuses into the batter. At such a high concentration, however, the intermolecular hydrogen bonding may be maintained and, as a result, the dipeptide does not cyclize or degrade. This effect is not observable in dilute aspartame solutions and the degradation rate of aspartame in dilute solution follows pseudo-first order kinetics which is independent of aspartame concentration.

The baking stability of aspartame granules spheronized according to the present invention can match that of non-spheronized APM granules coated with a fat. Many baked goods are less harmful to aspartame and/or are baked at milder conditions than yellow and chocolate cakes. For example, cookies have less water and are baked for shorter durations than cakes. Cheese cakes do not use baking soda or baking powder which are incompatible with APM since the alkaline pH environment results in the hydrolytic degradation of APM. Therefore, in some baked goods, APM granules with particle sizes smaller than 40 U.S. standard mesh still have good baking stability.

The present invention protects a dipeptide such as aspartame against thermal and aqueous degradation yet permits release of the sweetener at the appropriate time or temperature for functionality. If a matrix is first prepared comprising the dipeptide and either starch, polydextrose, cellulose or other food polymers prior to granule formation, the matrix is made up of between 10-100% of the dipeptide sweetener. The matrix may also contain 0-20% of a buffer composition or weak acid to maintain the granular pH in the range of 3.0-5.0 during baking. This pH range is optimum for aspartame's wet or solution stability. If the granule is then encapsulated with a fat, protein or carbohydrate, the dipeptide sweetener should comprise approximately 5-80% of the entire granule by weight.

The particle size range for satisfactory stability in baking and cooking applications was found to exist between 10 and 80 U.S. standard mesh, preferably 20-50 U.S. standard mesh. The sustained-release delay functions during cooking or baking can be further enhanced by the deposition of a protective coating about the spherical particles after spheronization. Suitable coating materials are hydrophobic compounds such as fat, protein, corn starch, insoluble fibers and other polymers.

The granules of the present invention are non-porous dense granules preferably of a uniform spherical particles falling within a narrow particle size distribution. The granule size chosen for a particular baking application should preferably fall within a narrower particle size range depending upon the baking application involved. The granules employed for a particular application should not vary more than approximately ±20 mesh between the smallest and the largest. Variations in size much greater than this for a particular application may result in non-uniform dissolution and dispersion. For example, the larger granules will withstand temperature and moisture longer than the smaller particles. Should much variation in granule size exist, the larger granules will remain intact while the smaller sized granules will dissolve and even degrade prior to dissolution of the larger particles causing non-uniform and inefficient release of sweetness throughout the final baked product.

The granules of the present invention can be made by a number of high shear-energy and roll compaction granulators commercially available in the art. These granulators produce non-spherical granules which may exhibit the improved self-stabilizing effects of the present invention. These granules are dense and non-porous and may be suitable for certain baking applications, but are not the preferred embodiment of this invention.

The preferred process for preparing the self-stabilized dipeptide granule of the present invention utilizes the inner chamber of the insert of an Aeromatic Prototype 1, Size 2 Roto-processor by Aeromatic Inc., Towaco, N.J. For purposes of this application, this device shall be referred to by its generic name, a spheronizer, which is essentially a large cylindrical chamber with a rotating disc bottom. The walls of the cylinder actually bend inwards from the circumference of the disc towards the center at about a 20° angle similiar to an upside down cone or funnel.

Commercial spheronizers of conventional design are not efficient in making uniform sized non-porous spherical granules of the present invention, particularly at production volumes. Therefore, the spheronizers utilized herein preferably include one or more of the following features modifying the commercial spheronizer design.

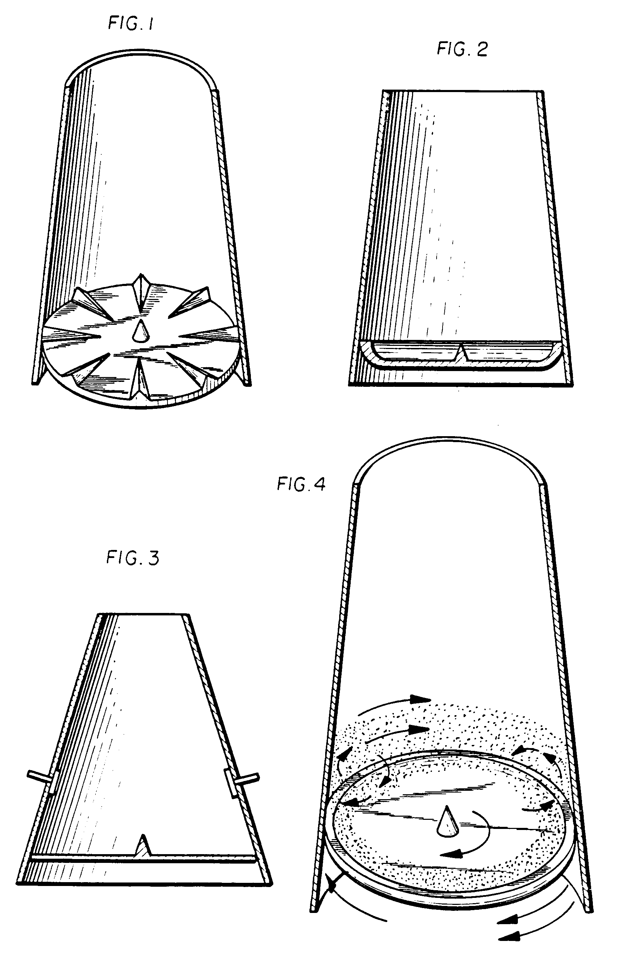

1) The rotating disc at the bottom of the cylinder has elevated spokes, equidistant from each other that radiate outward from near the center of the disc. (Fig. 1)

2) The edge of the rotating disc is curved upwards. (Fig. 2)

3) Adjustable flanges along the inner wall act as a circulation aid for the fluidized powder. (Fig. 3)

Any powdered dipeptide sweetener may be processed according to the spirit and scope of the present invention. Whereas aspartame, due to its present popularity within the food industry is the preferred embodiment, it is to be understood that the following teaching utilizes this dipeptide as the one of choice.

Dry APM powder is deposited into the cylinder of the spheronizer and initially falls onto the rotating disc. Rotation of the disc hurdles the particles against the walls of the cylinder and creates a centrifugal swirling turbulance or flow (Fig. 4) of the dipeptide particles that results in bombardments of the particles against themselves and the walls of the spheronizer.

During the process, a solvent is sprayed onto the fluidized powder to wet it uniformly. The preferred solvents are water, alcohols, such as methyl, ethyl and propyl alcohols, and their mixtures. At a proper wetness, the particles start to form uniform size spherical granules as a result of the bombardments against other particles and the cylinder walls caused by the centrifugal and the tangential fluidizing forces of the rotating disk and, due to the solvent effects such as dissolution and binding. The size of the spherical particles grows continuously and uniformly as additional crystals are compacted. The particle growth rate is controllable by adjusting the disk's rotation rate and/or the solvent spray rate.

The formation and growth of the spherical particles can be accelerated using one or more air jets directed at the fluidized wet powder. Desired particle size can be determined visually at which time the wet spheronized sample can be dried in a fluid bed drier.

The design of the commercially available Aeromatic roto-processor can not specifically perform the granulation process of this invention. It is designed for liquid and suspension spray-coatings under gentle fluidizing conditions. During normal operation, the position of the rotating disk bottom is lowered to have a circular opening through which wet powder is thrown out of the inner chamber by the force of the rotating disk. An outer chamber has an upward-flow of hot air which dries, lifts, and dumps the powder back into the inner chamber through its top opening for more spray-coating. There are two positions at which the circular disk can run with respect to the bottom of the spheronizer. Under normal conditions, the disc is lower than the bottom of the chamber whereby an opening exists between the inner and outer chambers. During the operation of the present process, the disc is raised to the same plane of the inner chamber bottom, thereby preventing any APM particles from falling through the bottom to the outer chamber.

Since the rotating disk of the spheronizer has limited fluidizing power, manual scraping is needed to keep the wet powder and granules circulating or fluidizing, especially near the end of a granulation run. An unmodified Aeromatic Prototype 1 size 2 Roto-Processor insert was initially used to make the granular samples of this invention. It has barely enough fluidizing power to granulate 2 kg APM powder per run. A trial run to granulate 4 kg APM powder using larger capacity equipment with an insert of the Aeromatic Prototype 2 size 2 failed to keep wet powder fluidized. Therefore, to permit unattended operation and for increased production capacity, the earlier described modifications of the spheronizer or the equipment are needed to increase its mechanical fluidizing power.

Instead of having an outer chamber, a Glatt roto-processor provides an upward air current along the inner wall to assist the rotating disk to fluidize the spheronized APM powder. However, this pneumatic turbulence significantly decreases the particle bombarding effect which is utilized by the method of this invention to make non-porous spherical granules. In addition, the pneumatic turbulence dries wet APM particles and breaks up already formed granules which are counterproductive actions. The Glatt equipment was tested and failed to make the granules of this invention.

The dense aspartame particles of spherical shape and uniform size produced by the present invention can be coated with one or more layers of the hydrophobic materials by fluidized-bed coating methods known in the art. If a fat or lipid type compound is used as a coating, a hot melt of the fat is sprayed onto the dense spheres in a cold fluidized bed. Polymer coatings are applied by spraying solutions containing the polymer and a binder such as Avicel, a microcrystalline cellulose, onto the aspartame granules in a hot or warm fluidized bed. Cooked or gelatinized starch, Methocel, (methylcellulose, Dow Chemical Co.) and zein can also be used as binders with the polymer coating.

The following examples summarize the results of aspartame recovery from several baking applications as compared to the recovery of its degraded form, diketopiperizine. Recovery analysis was performed in all instances using high performance liquid chromatography (HPLC). The aspartame compositions were varied in terms of whether an essentially pure aspartame granule was imbedded within the batter or whether a granule of aspartame mixed with other ingredients was prepared or whether the sweetener granule was encapsulated with a hydrophobic coating.

The following examples are provided to further illustrate the invention.

In the following examples, yellow cake was prepared by a standard cake recipe from dry ingredients consisting of flour, salt, baking powder, polydextrose, maltodextrin and gum arabic. Shortening was then blended into the dry ingredients, the mixture to which was added milk, eggs and vanilla. The batter was beaten for approximately 2 minutes. Cookies were prepared with essentially the same ingredients given above with the addition of dry egg white powder and the elimination of gum arabic.

The typical cake that was baked in the examples set forth below is about 400g of batter baked in a conventional oven at 350°F for 25 minutes unless otherwise noted. Cookies were baked at 400°F for 9 minutes.

Example 1

Pure aspartame powder not processed according to the present invention was baked in a yellow cake according to the previously described recipe and procedure. The size of the untreated aspartame particles was smaller than 100 U.S. standard mesh at the time of mixing into the batter. Upon recovery of the baked product it was found that only 27.9% of the initial aspartame mixed into the batter maintained its structure as shown by high performance liquid chromatography (HPLC). On the other hand, 45.4% of the initial aspartame had degraded to diketopiperizine (DKP). In another experiment, recovery analysis of the cake showed 29.9% of the initial aspartame retained as shown by HPLC whereby 32.8% degraded to DKP.

Example 2

In a yellow cake application, aspartame granules comprised of APM with a polydextrose binder were not spheronized according to the present invention. The granules were 20-30 U.S. standard mesh size and had a composition of 3:2 aspartame/polydextrose (PD) ratio. The cake had an APM recovery of 39.1%. When the granules are also coated with about 20% by weight of Aqua Coat[1], an ethyl cellulose composition, the recovery of aspartame in the baked product improved to 75.6% and the DKP level was reduced from 34.6% to 7.0% as shown by HPLC analysis. When this granular sample was coated with about 20% by weight of corn starch, APM'S surviving rate in yellow cake also increased to over 70%.

Example 3

The aspartame/polydextrose granules of Example 2 were coated with about 20% by weight of a mixture of Solka Floc, a powdered cellulose, and zein, a corn protein and baked into a cake according to the procedures and recipe previously set forth. Recovery and analysis by HPLC indicated 72.3% of the original aspartame was recovered from the cake in its original molecular state while 10.6% was degraded to DKP.

Example 4

Aspartame powder was spheronized according to the present invention and contained approximately 1% polydextrose as a binder without the use of hydrophobic coatings. The particles produced were dense spheres of substantially uniform shape and size in the range of 30-40 U.S. standard mesh. Recovery of aspartame from the baked cake yielded 63.9% aspartame in its original stable molecular shape while 19.8% degraded to DKP as shown by HPLC. Another spheronized 30-40 mesh size sample containing 70% APM

1. TM, FMC Corp.

6

and 30% Avicel showed 60.7% recovery of APM in a cake application while 16.7% degradated to DKP.

Example 5

Aspartame granules, spheronized according to the present invention contained 1% polydextrose as a binder. These were dense spherical particles in the size range of 20-30 U.S. standard mesh. HPLC analysis of the baked yellow cake showed 79.5% of the aspartame blended into the batter retained its original, sweet molecular form while 11.0% degraded to DKP.

Example 6

Different particle size range samples of aspartame (APM) granules not spheronized according to the present invention having a composition of 3:2:5 APM/polydextrose/Durkee 07, wherein the Durkee 07 was employed as an outer coating, were studied in cookies. In baked cookies the recoveries were found by HPLC to be: 88.4% APM and 2.3% DKP for APM granules of 30-50 U.S. standard mesh sample, 81.8% APM and 10.7% DKP for APM granules of 40-60 U.S. standard mesh sample, while 57.3% APM and 22.1% DKP was recovered for untreated APM powder.

Example 7

Aspartame powder and a polydextrose binder were mixed in a 99:1 parts by weight ratio, respectively. The mixture was spheronized according to the present invention into dense, spherical granules of uniform size distribution in different size ranges. The granules were then baked into the cookie recipe described hereinbefore in order to compare the heat stability of different particle size distributions in a cookie application. The stability of the different particle size distributions were compared by measuring the degree of APM degradation to diketopiperazine (DKP) by HPLC. The granules were not coated with a hydrophobic coating and were also compared with an untreated standard.

| Granule Size Distribution | Degree of Degradation after Baking |
| --- | --- |
| U.S. Standard Mesh | |
| a) Untreated APM Powder<br>b) 30-40 mesh<br>c) 40-50 mesh<br>d) 50-60 mesh<br>e) 60-80 + mesh | a) 52.4% APM; 25.9% DKP<br>b) 84.3% APM; 6.9% DKP<br>c) 85.5% APM; 8.8% DKP<br>d) 74.4% APM; 13.5% DKP<br>e) 69.2% APM; 15.8% DKP |

It is evident that in cookie baking applications (high heat for short durations) that specific particle size distributions in the range of 30-50 U.S. standard mesh exhibited the greatest degree of heat stability. It is also evident, however, that the smaller, dense granules in the 60-80 U.S. standard mesh range exhibit stability in cookie applications.

Example 8

Granular size distribution ranges that are achievable using the preferred spheronizer process were compared with those achievable using a commercially available roll compaction method known in the art. Both methods produced dense, non-porous granules of substantially spherical and non-spherical shape respectively. The APM powder was mixed with an Avicel binder in a 70/30 ratio and spheronized. APM powder was also roll compacted and broken up into irregular shaped granules. The sizes listed below were determined by multiple seiving the granular products.

| U.S. Standard Mesh | Granular Size Distribution | |
|---|---|---|
| | Roll Compaction Method (%) | Spheronizer Method (%) |
| a) 20 | 15.7 | 0.9 |
| b) 30 | 20.6 | 13.0 |
| c) 40 | 13.5 | 80.6 |
| d) 50 | 11.5 | 5.4 |
| e) 60 | 2.6 | 0 |
| f) 70 | 4.0 | 0 |
| g) 80 | 2.3 | 0 |
| h) 80 | 29.4 | 0 |

It is clear from the above example that whereas both methods produce dense, non-porous granules that exhibit the self stabilizing characteristics for heat applications, the spheronizer has the ability to produce uniform, spherical particles falling within a very narrow particle size distribution permitting the manufacture of narrowly defined particle sizes for specific baking applications. The granules produced by conventional, commercially available compaction methods, however, cover a wide range of sizes which are not as suitable for specific baking purposes.

## Claims

1. A method for improving the heat stability of a dipeptide sweetener, its salts or complexes comprising the spheronization of said dipeptide into dense, non-porous, spherical granules of substantially uniform particle size distribution in the range of 10-80 US. standard mesh.

2. The method disclosed in claim 1 wherein said dipeptide sweetener is aspartame, its salts or complexes.

3. The method disclosed in claim 2 wherein said particle size distribution ranges between 10 and 80 U.S. standard mesh.

4. The method disclosed in claim 2 wherein said particle size distribution ranges between 20 and 50 U.S. standard mesh.

5. A method for improving the heat stability of a dipeptide sweetener, its salts or complexes, comprising the steps of
   - spheronizing said dipeptide with or without a suitable binding agent to produce dense non-porous spherical granules of substantially narrow particle size distribution and,
   - coating said particles with one or more layers of a suitable hydrophobic coating.

6. The method disclosed in claim 5 wherein said dipeptide sweetener is aspartame, its salts or complexes.

7. The method disclosed in claim 6 wherein said binding agent is selected from the group comprising polymeric carbohydrates, proteins, buffer compositions with a pH of approximately 3-5, weak food acids and inactive pharmaceutical compositions.

8. The method disclosed in claim 7 wherein said particle size distribution is between 10 and 80 U.S. standard mesh.

9. The method disclosed in claim 5, 6, 7 or 8 wherein said hydrophobic coatings are selected from the group consisting of fats, starches, proteins, water insoluble fibers, polymers, and mixtures thereof.

10. The method disclosed in claim 7 wherein said polymeric carbohydrate is selected from the group consisting of polydextrose, Avicel and starch.

11. The method disclosed in claim 9 wherein said fat is selected from the group consisting of partially

EP 0 329 735 B1

hydrogenated vegetable oil, partially hydrogenated triglyceride fats, mono-glyceride fats, a mixture of mono and diglyceride fats, glycerol monostearate and mixtures thereof.

12. The method of claim 10 or 11 wherein said particle size range is between 20 and 50 standard U.S. mesh.

13. A self stabilized dipeptide sweetener composition, its salts and complexes, useful in cooking and baking applications comprising a dipeptide sweetener that has been spheronized into a dense, non-porous granule of substantially spherical shape falling within a narrow particle size distribution in the range of 10-80 US standard mesh.

14. The self stabilized dipeptide sweetener composition disclosed in claim 13 wherein said dipeptide is aspartame, its salts or complexes thereof.

15. The self stabilized dipeptide sweetener composition disclosed in claim 14 wherein said particle size distribution is 10 to 80 U.S. standard mesh.

16. The self stabilized dipeptide sweetener composition disclosed in claim 13 or 14 wherein said particle size distribution 20 to 50 U.S. standard mesh.

17. The self stabilized dipeptide sweetener composition disclosed in claim 13 further comprising the addition of a binding agent to said sweetener composition.

18. The self stabilized dipeptide sweetener composition disclosed in claim 17 wherein said dipeptide is aspartame, its salts or complexes.

19. The self stabilized dipeptide sweetener composition disclosed in claim 18 wherein said particle size range is 10 to 80 U.S. standard mesh.

20. The self stabilized dipeptide sweetener composition disclosed in claim 18 wherein said particle size range is 20 to 50 U.S. standard mesh.

21. The self stabilized dipeptide sweetener composition disclosed in claim 17 or 18 wherein said binding agent is selected from the group consisting of polymeric carbohydrates, proteins, buffer compositions with a pH of 3.0-5.0, weak food acids, inactive pharmaceutical compositions and mixtures thereof.

22. The self stabilized dipeptide sweetener composition disclosed in claim 21 wherein said carbohydrate is selected from the group consisting of starch, polydextrose, cellulose, polymaltose and mixtures thereof.

23. The self stabilized dipeptide sweetener composition disclosed in claim 13 wherein said non-porous spherical granule is coated with a hydrophobic coating.

24. The self stablized dipeptide sweetener composition disclosed in claim 23 wherein said hydrophobic coating is selected from the group consisting of fats, starches, proteins, insoluble fibers, polymers and mixtures thereof.

25. The self stabilized dipeptide sweetener composition disclosed in claim 24 wherein said dipeptide sweetener is aspartame.

26. The self stabilized dipeptide sweetener composition disclosed in claim 25 wherein said particle size range is 10 to 80 U.S. standard mesh.

27. The self stabilized dipeptide sweetener composition disclosed in claim 25 wherein said particle size range is 20 to 50 U.S. standard mesh.

28. The self stabilized dipeptide sweetener composition disclosed in claim 25 wherein said polymer is polydextrose, microcrystalline cellulose or mixtures thereof.

9

29. The self stabilized dipeptide sweetener disclosed in claim 24 wherein said fat is selected from a group consisting of partially hydrogenated vegetable oil, partially hydrogenated triglyceride fats, mono-glyceride fats, a mixture of mono-and diglyceride fats, glycerol monostearate and mixtures thereof.

30. A self stabilized dipeptide sweetener composition, its salts and complexes, useful in mild cooking and baking applications comprising a dipeptide sweetener that has been granulated into dense, non-porous granules falling within a narrow particle size distribution.

31. The self stabilized dipeptide sweetener composition disclosed in claim 30 wherein said dipeptide sweetener is aspartame, its salts and complexes.

32. The self stabilized dipeptide sweeteners disclosed in claim 31 wherein said narrow particle size range is 40-80 U.S. standard mesh.

33. The self stabilized dipeptide sweetener disclosed in claim 32 further comprising coating said granule with 30-90% by weight of one or more layers of a hydrophobic coating.

34. The self stabilized dipeptide sweetener of claim 33 wherein said hydrophobic coating is selected from the group consisting of fats, starches, proteins, water insoluble fibers, polymers and mixtures thereof.

35. The self stabilized dipeptide composition disclosed in claim 34 wherein said fats are selected from the group consisting of partially hydrogenated vegetable oil, partially hydrogenated triglyceride fats, mono-glyceride fats, a mixture of mono- and diglyceride fats, glycerol monostearate and mixtures thereof.

36. The self stabilized dipeptide sweetener composition of claims 32, 33 or 34 further comprising mixing said dipeptide with 0-20% of a buffer composition or weak acid with a p.H. 3.0-5.0 during granulation.

37. The self stabilized dipeptide sweetener composition of claims 30, 31, 32, 33, 34 or 35 wherein said cooking and baking applications comprise cookies, pies, cheesecakes or other non-alkaline matrices.

**Patentansprüche**

1. Verfahren zur Verbesserung der Hitzestabilität eines Dipeptid-Süßmittels, dessen Salzen oder Komplexen, umfassend die Späronisation dieses Dipeptids in dichte, nicht-poröse sphärische Granulate von im wesentlichen einheitlicher Teilchengrößen-Verteilung im Bereich von 10 bis 80 US-Standardmesh.

2. Verfahren gemäß Anspruch 1, worin dieses Dipeptid-Süßmittel Aspartam, dessen Salze oder Komplexe ist.

3. Verfahren gemäß Anspruch 2, worin der Teilchengrößen-Verteilung im Bereich zwischen 20 und 80 US-Standardmesh liegt.

4. Verfahren gemäß Anspruch 2, worin die Teilchengrößen-Verteilung im Bereich zwischen 20 und 50 US-Standardmesh liegt.

5. Verfahren zur Verbesserung der Hitzestabilität eines Dipeptid-Süßmittels, dessen Salzen oder Komplexen, umfassend die Schritte:
   - dieses Dipeptid mit oder ohne geeignetes Bindemittel spähronisieren, um dichte, nicht poröse sphärische Granulate von im wesentlichen enger Teilchengrößen-Verteilung herzustellen und
   - diese Partikel mit einer oder mehreren Schichten eines geeigneten hydrophoben Überzugs überziehen.

6. Verfahren gemäß Anspruch 5, worin dieses Dipeptid-Süßmittel Aspartam, dessen Salze oder Komplexe ist.

7. Verfahren gemäß Anspruch 6, worin das Bindemittel ausgewählt ist aus der Gruppe, umfassend polymere Kohlehydrate, Proteine, Puffer-Zusammensetzungen mit einem pH-Wert von annähernd 3-5, schwache Lebensmittelsäuren und inaktive pharmazeutische Zusammensetzungen.

8. Verfahren gemäß Anspruch 7, worin die Teilchengrößen-Verteilung zwischen 10 und 80 US-Standardmesh beträgt.

9. Verfahren gemäß Anspruch 5, 6, 7 oder 8, worin die hydrophoben Überzüge ausgewählt sind aus der Gruppe bestehend aus Fetten, Stärken, Proteinen, wasserunlöslichen Fasern, Polymeren und deren Mischungen.

10. Verfahren gemäß Anspruch 7, worin das polymere Kohlehydrat ausgewählt ist aus der Gruppe, bestehend aus Polydextrose, Avicel und Stärke.

11. Verfahren gemäß Anspruch 9, worin das Fett ausgewählt ist aus der Gruppe, bestehend aus partiell hydriertem Pflanzenöl, partiell hydrierten Triglyceridfetten, Monoglyceridfetten, einer Mischung aus Mono- und Diglyceridfetten, Glycerol-monostearat und deren Mischungen.

12. Verfahren gemäß Anspruch 10 oder 11, worin der Teilchengrößenbereich zwischen 20 und 50 US-Standardmesh beträgt.

13. Eine selbst-stabilisierte Dipeptid-Süßmittel-Zusammensetzung, deren Salze und Komplexe, die nützlich ist bei Koch- und bei Backvorgängen, umfassend ein Dipeptid-Süßmittel, das in ein dichtes, nicht-poröses Granulat von im wesentlichen sphärischer Größe sphäronisiert worden ist und in eine enge Teilchengrößen-Verteilung im Bereich von 10 bis 80 US-Standardmesh fällt.

14. Die selbst-stabilisierte Dipeptid-Süßmittel-Zusammensetzung gemäß Anspruch 13, worin das Dipeptid Aspartam, dessen Salze oder Komplexe ist.

15. Die selbst-stabilisierte Dipeptid-Süßmittel-Zusammensetzung gemäß Anspruch 14, worin die Teilchengrößen-Verteilung zwischen 10 und 80 US-Standardmesh liegt.

16. Die selbst-stabilisierte Dipeptid-Süßmittel-Zusammensetzung gemäß Anspruch 13 oder 14, worin die Teilchengrößen-Verteilung zwischen 20 und 50 US-Standardmesh beträgt.

17. Die selbst-stabilisierte Dipeptid-Süßmittel-Zusammensetzung gemäß Anspruch 13, welche weiterhin den Zusatz eines Bindemittels zu der Süßmittel-Zusammensetzung umfaßt.

18. Die selbst-stabilisierte Dipeptid-Süßmittel-Zusammensetzung gemäß Anspruch 17, worin das Dipeptid Aspartam, dessen Salze oder Komplexe ist.

19. Die selbst-stabilisierte Dipeptid-Süßmittel-Zusammensetzung gemäß Anspruch 18, worin der Teilchengrößenbereich zwischen 10 und 80 US-Standardmesh beträgt.

20. Die selbst-stabilisierte Dipeptid-Süßmittel-ZusammenSetzung gemäß Anspruch 18, worin der Teilchengrößenbereich zwischen 20 und 50 US-Standardmesh beträgt.

21. Die selbst-stabilisierte Dipeptid-Süßmittel-Zusammensetzung gemäß Anspruch 17 oder 18, worin das Bindemittel ausgewählt ist aus der Gruppe, bestehend aus polymeren Kohlehydraten, Proteinen, Puffer-Zusammensetzungen mit einem pH-Wert von 3-5, schwachen Lebensmittelsäuren, inaktiven pharmazeutischen Zusammensetzungen und deren Mischungen.

22. Die selbst-stabilisierte Dipeptid-Süßmittel-Zusammensetzung gemäß Anspruch 21, worin das Kohlehydrat ausgewählt ist aus der Gruppe bestehend aus Stärke, Polydextrose, Cellulose, Polymaltose und deren Mischungen.

23. Die selbst-stabilisierte Dipeptid-Süßmittel-Zusammensetzung gemäß Anspruch 13, worin dieses nicht-poröse sphärische Granulat mit einem hydrophoben Überzug überzogen ist.

24. Die selbst-stabilisierte Dipeptid-Süßmittel-Zusammensetzung gemäß Anspruch 23, worin der hydrophobe Überzug ausgewählt ist aus der Gruppe, bestehend aus Fetten, Stärken, Proteinen, unlöslichen Fasern, Polymeren und deren Mischungen.

**25.** Die selbst-stabilisierte Dipeptid-Süßmittel-Zusammensetzung gemäß Anspruch 24, worin das Dipeptid-Süßmittel Aspartam ist.

**26.** Die selbst-stabilisierte Dipeptid-Süßmittel-Zusammensetzung gemäß Anspruch 25, worin der Teilchengrößenbereich zwischen 10 und 80 US-Standardmesh liegt.

**27.** Die selbst-stabilisierte Dipeptid-Süßmittel-Zusammensetzung gemäß Anspruch 25, worin der Teilchengrößenbereich zwischen 20 und 50 US-Standardmesh beträgt.

**28.** Die selbst-stabilisierte Dipeptid-Süßmittel-Zusammensetzung gemäß Anspruch 25, worin das Polymer Polydextrose, mikrokristalline Cellulose oder deren Mischungen ist.

**29.** Das selbst-stabilisierte Dipeptid-Süßmittel gemäß Anspruch 24, worin das Fett ausgewählt ist aus einer Gruppe bestehend aus partiell hydriertem Pflanzenöl, partiell hydrierten Triglyceridfetten, Monoglyceridfetten, einer Mischung aus Mono- und Diglyceridfetten, Glycerol-monostearat und deren Mischungen.

**30.** Die selbst-stabilisierte Dipeptid-Süßmittel-Zusammensetzung, deren Salze und Komplexe, welche zur Anwendung bei mildem Kochen und Backen geeignet ist, umfassend ein Dipeptid-Süßmittel, das zu dichten, nicht-porösen Granulaten granuliert worden ist und in einen engen Teilchengrößen-Verteilungsbereich fällt.

**31.** Die selbst-stabilisierte Dipeptid-Süßmittel-Zusammensetzung gemäß Anspruch 30, worin das Dipeptid-Süßmittel Aspartam, dessen Salze und Komplexe ist.

**32.** Das selbst-stabilisierte Dipeptid-Süßmittel gemäß Anspruch 31, worin der enge Teilchengrößenbereich zwischen 40 und 80 US-Standardmesh beträgt.

**33.** Das selbst-stabilisierte Dipeptid-Süßmittel gemäß Anspruch 32, welches weiterhin einen Überzug des Granulats mit 30 bis 90 Gew.-% einer oder mehrerer Schichten eines hydrophoben Überzugs umfaßt.

**34.** Das selbst-stabilisierte Dipeptid-Süßmittel gemäß Anspruch 33, worin der hydrophobe Überzug ausgewählt ist aus der Gruppe bestehend aus Fetten, Stärken, Proteinen, wasserunlöslichen Fasern, Polymeren und deren Mischungen.

**35.** Die selbst-stabilisierte Dipeptid-Süßmittel-Zusammensetzung gemäß Anspruch 34, worin die Fette ausgewählt sind aus der Gruppe, bestehend aus partiell hydriertem Pflanzenöl, partiell hydrierten Triglyceridfetten, Monoglyceridfetten, einer Mischung aus Mono- und Diglyceridfetten, Glycerol-monostearat und deren Mischungen.

**36.** Die selbst-stabilisierte Dipeptid-Süßmittel-Zusammensetzung gemäß Anspruch 32, 33 oder 34, welche weiterhin das Mischen dieses Dipeptids mit 0 bis 20% einer Puffer-Zusammensetzung oder einer schwachen Säure mit einem pH-Wert von 3-5 während der Granulierung umfaßt.

**37.** Die selbst-stabilisierte Dipeptid-Süßmittel-Zusammensetzung gemäß Anspruch 30, 31, 32, 33, 34 oder 35, worin die Koch- und Back-Anwendungen Kekse, Pasteten, Käsekuchen oder andere nicht-alkalische Matrices umfassen.

**Revendications**

**1.** Procédé d'amélioration de la stabilité à chaud d'un édulcorant dipeptidique, de ses sels ou complexes, comprenant la sphéroïdisation dudit dipeptide en granules sphériques denses, non poreux, de distribution granulométrique sensiblement uniforme dans la plage de 10 à 80 mesh (U.S. standard).

**2.** Procédé selon la revendication 1, dans lequel ledit édulcorant dipeptidique est de l'aspartame, ses sels ou complexes.

**3.** Procédé selon la revendication 2, dans lequel ladite distribution granulométrique est comprise entre 10 et 80 mesh (U.S. standard).

**4.** Procédé selon la revendication 2, dans lequel ladite distribution granulométrique est comprise entre 20 et 50 mesh (U.S. standard).

**5.** Procédé d'amélioration de la stabilité à chaud d'un édulcorant dipeptidique, de ses sels ou complexes, comprenant les étapes de
- sphéroïdisation dudit dipeptide avec ou sans liant approprié pour produire des granules sphériques denses, non poreux, de distribution granulométrique sensiblement étroite, et
- revêtement desdites particules par une ou plusieurs couches d'un revêtement hydrophobe approprié.

**6.** Procédé selon la revendication 5, dans lequel ledit édulcorant dipeptidique est de l'aspartame, ses sels ou complexes.

**7.** Procédé selon la revendication 6, dans lequel ledit liant est sélectionné dans le groupe comprenant des glucides polymères, des protéines, des compositions tampons de pH compris approximativement entre 3 et 5, des acides alimentaires faibles et des compositions pharmaceutiques inactives.

**8.** Procédé selon la revendication 7, dans lequel ladite distribution granulométrique est comprise entre 10 et 80 mesh (U.S. standard).

**9.** Procédé selon la revendication 5, 6, 7 ou 8, dans lequel lesdits revêtements hydrophobes sont sélectionnés dans le groupe constitué par des graisses, des amidons, des protéines, des fibres non hydrosolubles, des polymères et leurs mélanges.

**10.** Procédé selon la revendication 7, dans lequel ledit glucide polymère est sélectionné dans le groupe constitué par le polydextrose, Avicel et l'amidon.

**11.** Procédé selon la revendication 9, dans lequel ladite graisse est sélectionnée dans le groupe constitué par une huile végétale partiellement hydrogénée, des triglycérides partiellement hydrogénés, des monoglycérides, un mélange de monoglycérides et de diglycérides, du monostéarate de glycérol et leurs mélanges.

**12.** Procédé selon la revendication 10 ou 11, dans lequel ladite plage granulométrique est comprise entre 20 et 50 mesh (U.S. standard).

**13.** Composition d'édulcorant dipeptidique autostabilisé, ses sels et complexes, utiles dans des applications de cuisson et cuisson au four, comprenant un édulcorant dipeptidique sphéroïdisé en un granule dense, non poreux, de forme sensiblement sphérique, compris dans une distribution granulométrique étroite dans la plage de 10 à 80 mesh (U.S. standard).

**14.** Composition d'édulcorant dipeptidique autostabilisé selon la revendication 13, dans laquelle ledit dipeptide est de l'aspartame, ses sels ou complexes.

**15.** Composition d'édulcorant dipeptidique autostabilisé selon la revendication 14, dans laquelle ladite distribution granulométrique est comprise entre 10 et 80 mesh (U.S. standard).

**16.** Composition d'édulcorant dipeptidique autostabilisé selon la revendication 13 ou 14, dans laquelle ladite distribution granulométrique est comprise entre 20 et 50 mesh (U.S. standard).

**17.** Composition d'édulcorant dipeptidique autostabilisé selon la revendication 13, comprenant en outre l'addition d'un liant à ladite composition d'édulcorant.

**18.** Composition d'édulcorant dipeptidique autostabilisé selon la revendication 17, dans laquelle ledit dipeptide est de l'aspartame, ses sels ou complexes.

**19.** Composition d'édulcorant dipeptidique autostabilisé selon la revendication 18, dans laquelle ladite plage granulométrique est comprise entre 10 et 80 mesh (U.S. standard).

**20.** Composition d'édulcorant dipeptidique autostabilisé selon la revendication 18, dans laquelle ladite plage granulométrique est comprise entre 20 et 50 mesh (U.S. standard).

**21.** Composition d'édulcorant dipeptidique autostabilisé selon la revendication 17 ou 18, dans laquelle ledit liant est sélectionné dans le groupe constitué par des glucides polymères, des protéines, des compositions tampons de pH compris entre 3,0 et 5,0, des acides alimentaires faibles, des compositions pharmaceutiques inactives et leurs mélanges.

**22.** Composition d'édulcorant dipeptidique autostabilisé selon la revendication 21, dans laquelle ledit glucide est sélectionné dans le groupe constitué par l'amidon, le polydextrose, la cellulose, le polymaltose et leurs mélanges.

**23.** Composition d'édulcorant dipeptidique autostabilisé selon la revendication 13, dans laquelle ledit granule sphérique non poreux est revêtu d'un revêtement hydrophobe.

**24.** Composition d'édulcorant dipeptidique autostabilisé selon la revendication 23, dans laquelle ledit revêtement hydrophobe est sélectionné dans le groupe constitué par des graisses, des amidons, des protéines, des fibres insolubles, des polymères et leurs mélanges.

**25.** Composition d'édulcorant dipeptidique autostabilisé selon la revendication 24, dans laquelle ledit édulcorant dipeptidique est de l'aspartame.

**26.** Composition d'édulcorant dipeptidique autostabilisé selon la revendication 25, dans laquelle ladite plage granulométrique est comprise entre 10 et 80 mesh (U.S. standard).

**27.** Composition d'édulcorant dipeptidique autostabilisé selon la revendication 25, dans laquelle ladite plage granulométrique est comprise entre 20 et 50 mesh (U.S. standard).

**28.** Composition d'édulcorant dipeptidique autostabilisé selon la revendication 25, dans laquelle ledit polymère est du polydextrose, de la cellulose microcristalline ou leurs mélanges.

**29.** Edulcorant dipeptidique autostabilisé selon la revendication 24, dans lequel ladite graisse est sélectionnée dans le groupe constitué par une huile végétale partiellement hydrogénée, des triglycérides partiellement hydrogénés, des monoglycérides, un mélange de monoglycérides et de diglycérides, du monostéarate de glycérol et leurs mélanges.

**30.** Composition d'édulcorant dipeptidique autostabilisé, ses sels et complexes, utiles dans des applications douces de cuisson et cuisson au four, comprenant un édulcorant dipeptidique qui a été granulé en granules denses, non poreux, compris dans une distribution granulométrique étroite.

**31.** Composition d'édulcorant dipeptidique autostabilisé selon la revendication 30, dans laquelle ledit édulcorant dipeptidique est de l'aspartame, ses sels et complexes.

**32.** Edulcorant dipeptidique autostabilisé selon la revendication 31, dans lequel ladite plage granulométrique étroite est comprise entre 40 et 80 mesh (U.S. standard).

**33.** Edulcorant dipeptidique autostabilisé selon la revendication 32, comprenant en outre le revêtement dudit granule par 30 à 90 % en poids d'une ou plusieurs couches d'un revêtement hydrophobe.

**34.** Edulcorant dipeptidique autostabilisé selon la revendication 33, dans lequel ledit revêtement hydrophobe est sélectionné dans le groupe constitué par des graisses, des amidons, des protéines, des fibres insolubles dans l'eau, des polymères et leurs mélanges.

**35.** Composition dipeptidique autostabilisée selon la revendication 34, dans laquelle lesdites graisses sont sélectionnées dans le groupe constitué par une huile végétale partiellement hydrogénée, des triglycérides partiellement hydrogénés, des monoglycérides, un mélange de monoglycérides et de diglycérides, du monostéarate de glycérol et leurs mélanges.

14

**36.** Composition d'édulcorant dipeptidique autostabilisé selon les revendications 32, 33 ou 34, comprenant en outre le mélange dudit dipeptide avec 0 à 20 % d'une composition tampon ou d'un acide faible de pH compris entre 3,0 et 5,0 durant la granulation.

**37.** Composition d'édulcorant dipeptidique autostabilisé selon les revendications 30, 31, 32, 33, 34 ou 35, dans laquelle lesdites applications de cuisson et cuisson au four comprennent des petits gâteaux, des pâtés, des gâteaux au fromage et autres matrices non alcalines.

FIG. 1

FIG. 2

FIG. 4

FIG. 3